Europäisches Patentamt

European Patent Office

Office européen des brevets

(19)

(11) Publication number: **0 231 873 B1**

# EUROPEAN PATENT SPECIFICATION

(12)

(45) Date of publication of patent specification: **24.07.91** (51) Int. Cl.⁵: **G01N 11/14**

(21) Application number: **87101175.5**

(22) Date of filing: **28.01.87**

(54) Rotating viscometer.

(30) Priority: **29.01.86 JP 11422/86 U**

(43) Date of publication of application:
**12.08.87 Bulletin 87/33**

(45) Publication of the grant of the patent:
**24.07.91 Bulletin 91/30**

(84) Designated Contracting States:
**DE FR GB**

(56) References cited:
**EP-A- 0 007 427      EP-A- 0 015 195
DE-A- 1 498 820      DE-A- 1 798 201
DE-A- 2 601 487      DE-U- 1 951 710
DE-U- 7 233 586**

(73) Proprietor: **KABUSHIKI KAISHA MARUKOMU
No. 15-10, Honcho 4-chome Shibuya-ku
Tokyo(JP)**

(72) Inventor: **Harada, Manabu
No. 45-38, Kitazawa 1-chome
Setagaya-ku Tokyo(JP)**

(74) Representative: **Patentanwälte Grünecker,
Kinkeldey, Stockmair & Partner
Maximilianstrasse 58
W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a rotating viscometer comprising an inner and an outer preferentially cylindrical member with a clearance between opposite surfaces of the two members, said members being rotatable relatively to each other about a common axis at a constant rotational speed;

a paste inlet formed in said outer member for allowing a paste to flow into the clearance; a spiral groove formed in one of said opposite surfaces or both of said opposite surfaces of the two members respectively and extending along said axis at least over the whole length of said clearance for guiding said paste through said clearance along said axis;

a paste outlet formed in said outer member for allowing said paste guided through said clearance to flow out of the clearance; and

means for sensing a torque applied to one of said members owing to the viscosity of said paste introduced into the clearance.

A viscometer of the type having concentric open ended cylindrical elements, one of which is positioned within the other, is known from EP-A1-0 007 427. The open ended cylindrical elements are positioned within a chamber containing a mass of liquid, the viscosity of which is to be monitored.

A viscometer as mentioned at the beginning of the description is known from the DE-A-26 01 487. The viscometer is adapted for continuous measurements of a viscosity of Newtonian or non-Newtonian fluids. The fluid to be tested is drawn in an annular gap between concentric cylinders in a circumferential direction. In order to bring about an axial flow through the annulus, the geometry of one of the cylinders is modified such that a small axial pressure gradient is formed. The modification consists of a small spiral groove while the main part of the cylinder surface remains unchanged. The task underlying this viscometer is to find a rotational rheometer for flowing substances which operates independently of the pump or an externally predetermined pressure differential.

The present invention relates to a rotating viscometer permitting the accurate measurement of the viscosity of a fluid with properties of non-Newtonian fluids, to say nothing of a Newtonian fluid, even if the amounts are small. The rotating viscometer is suited especially for a screen printing machine and, moreover, is designed in such a way that it allows to measure and control the viscosity of the fluid such as a paste immediately before its coating over a substrate on the printing machine and the viscosity can be specified and a precise control of the viscosity level of the fluid can be achieved.

There is an ever-increasing demand for the densification and hybridization of electronic devices in this age of electronics.

According to the hybrid microelectronics technology which has been developed to meet the above demand, active elements equipped with various functions are packaged in combination with passive elements such as resistors, capacitors and the like on a substrate to materialize a light, thin, short and small hybrid IC module.

In the fabrication process of a hybrid IC, a printing step is included as the first step in order to print a substrate. This printing is conducted by a screen printing machine. By the screen printing machine, the substrate is printed with various pastes such as conductive paste, resistive paste, dielectric paste and solder paste, a resist ink, and inks of other functional materials, mainly, in accordance with the screen printing technique.

This printing work require a high degree of accuracy because of the nature of the hybrid IC. In such printing work, the accuracy of printed film thickness and patterns is heavily dependent on the accuracy of control of various functions of the screen printing machine.

As a controlled variable which is considered to be most important in increasing the accuracy of printing work but is regarded as a variable difficult to control, there is the viscosity of a paste (ink) itself.

Under the circumstances, such difficulties in controlling the viscosity of a paste are dealt with depending on experiences of printing technicians and laboratory measurements in many instances.

The difficulties in the control of viscosities of pastes can be attributed to the fact that many pastes have properties as non-Newtonian fluids and are equipped with thixotropic properties and are hence affected by surrounding conditions such as temperature and humidity and moreover, their viscosities do not remain constant not only during but also after their kneading.

Even if the viscosity of a paste is measured by a viscometer after its kneading, the paste is fed to a screen printing machine subsequent to its kneading to a desired viscosity and a substrate is then printed with the-thus fed paste, the viscosity of the paste changes moment by moment and does not remain stable daring the printing work so that no accurate screen printing work is feasible.

Moreover, the paste is kneaded further by a squeezee (i.e., a doctor blade for coating the paste) during the printing work. This additional kneading renders the viscosity of the paste more instable, thereby making it impossible to perform accurate screen printing.

Viscometers which have conventionally been employed for screen printing are rotating viscometers, because they are also employed to knead pastes stored in tanks. Namely, the rotational resistance of each rotating viscometers is recorded as a viscosity. Such conventional viscometers are therefore relatively large and expensive.

According to such a rotating viscometer, the viscosity of a paste in a tank is measured as if it is done in a laboratory. It is impossible to measure the viscosity of a paste right on a screen printing machine. Since the viscosity of the paste cannot be measured and controlled accurately, no precise screen printing can be expected.

A paste has properties like non-Newtonian fluids as mentioned above. The viscosities of such non-Newtonian fluids vary considerably depending on temperature. In addition, the viscosity of a paste changes significantly in accordance with the shearing speed and time of the paste by the rotary member.

For these reasons, the measurement of the viscosity of a paste was periodically effected at a fixed interval, for example, at every third minute by using a stopwatch. This method may at first glance look as if an accurate viscosity measurement is feasible. This method however requires to measure the viscosity of the entirety of a large amount of a paste under kneading. Otherwise, its accurate viscosity cannot be determined. In addition, the viscosity must be measured repeatedly many times. The above method is hence accompanied by further drawbacks that the viscosity of the paste can hardly be measured continuously, the measurement of the viscosity cannot be automated, the efficiency of the measurement is low, and the accurate measurement of the viscosity is cumbersome.

In other words, the viscosity of the paste cannot be specified because its shearing time cannot be controlled constant.

For various other causes such as operator, environmental conditions and the like, it has been unable to achieve accurate viscosity control of non-Newtonian fluids like pastes.

With a view toward controlling the shearing time constant, it was attempted to measure the viscosity of a paste while recirculating the paste forcedly. This method however develops the following drawbacks.

1. A complex system is required for the forced recirculation, leading to a drawback that the viscometer itself becomes large and expensive.

2. The drawback 1) is accompanied by another drawback that the viscosity of the paste cannot be measured easily.

3. According to the forced recirculation, the recirculating force affects a torque produced to measure the viscosity of the paste, leading to a drawback that the viscosity of the paste cannot be measured precisely and accurately.

4. When a falling-type forced recirculation method is employed, it is impossible to control the shearing time constant, resulting in a drawback that no accurate viscosity measurement is feasible like the above-mentioned rotation-type.

5. In addition, the forced recirculation method requires a larger flow passage for the recirculation of the paste, leading to a drawback that the rotating viscometer itself becomes large and expensive.

It is the object of this invention to provide a viscometer of the type as mentioned at the beginning of the description and, in particular, to meet the demand for improved accuracy in screen printing.

The inventive viscometer is characterized in that the lead angle of the spiral groove is lower than $10°$ and the clearance is small enough so that the shear rate and the shearing time remain substantially constant.

By these inventive features it is achieved that a paste having properties like a non-Newtonian fluid can be measured at a high accuracy. Since the shear rate and the shearing time are maintained substantially constant even a paste with thixotropic properties can be accurately measured.

Furthermore, the present invention provides a rotating viscometer which has such a small size and high accuracy that the accurate viscosity of the paste right before its application on a substrate can be measured and controlled on a screen printing machine and, moreover, which can be manufactured at a low cost as well as a rotating viscometer which can control the shearing time of fluids such as a paste always constant even if the fluid shows non-Newtonian behavior and even while the fluid is being kneaded, whereby the viscosity of the fluid can be specified and the accurate viscosity of the fluid can hence be measured and controlled automatically without using any stopwatch whenever its viscosity is measured.

In the case of a non-Newtonian fluid like paste in particular, its viscosity generally changes depending on its shearing time. Its viscosity, therefore, varies as it is sheared in a viscometer. It is hence necessary to specify the measurement time for the determination of its viscosity.

With the foregoing in view, the present invention provides a rotating viscometer in which, when a cylinder is rotated to knead a paste, the paste is automatically drawn upward and at a constant shearing speed (i.e., at a constant revolution speed) and is discharged upon a lapse of constant time so as to recirculate the paste continuously and to make the time, during which the paste is subjected to shearing within the main body of the rotating viscometer, always constant, in other words, to achieve a characteristic of constant shearing time; and even in the case of a fluid the viscosity of which depends on the shearing time, such as a paste, its viscosity can be measured continuously and accurately.

The specification of a viscometer, which can fulfill the above-described requirements for its application on a screen printing machine, namely, permits measurement of the viscosity of a paste moving on the screen printing machine while being kneaded thereon, includes:

(1) the measurement of the viscosity of the paste is not affected by its flow caused by its movement and kneading;

(2) in order to investigate the thixotropic properties and flow curve of the paste, the revolution speed of the rotary member can be varied over a wide range, for example, from 1 rpm to 100 rpm;

(3) the measurement of the viscosity of the paste can be effected without need for inserting the rotary member in its entirety in the paste;

(4) the measurement of the viscosity of the paste can be achieved even if the paste is in a small amount as little as a thumb;

(5) the viscometer is durable;

(6) the viscometer is small;

(7) the viscometer is inexpensive; and

(8) the shearing time of the paste can be controlled constant even while the paste is being kneaded, and as a result, the viscosity of the paste can be specified.

The rotating viscometer useful on the screen printing machine must satisfy such contradictory requirements.

The requirement (1) is needed in order to measure accurately the viscosity of the paste on the screen printing machine, in other words, is needed from the use conditions inherent to screen printing.

The requirement (2) is needed from the properties of the highly-viscous paste employed in screen printing and having properties like non-Newtonian fluids.

The requirements (3) and (4) are needed to measure the viscosity of the small amount of the paste on the screen printing machine accurately there.

The requirement (5) is needed because the viscometer is moved frequently on the screen printing machine while measuring the viscosity.

The requirement (6) is needed from the limitation in space that similar to the requirement (5), the viscometer has to be arranged on the screen printing machine to measure the viscosity of the paste on the screen printing machine.

The requirement (7) is an obvious need upon producing goods. In the case of screen printing machines in particular, the low manufacturing cost leads to screen printing machines having a high market value.

The requirement (8) allows to control the shearing time, namely, the measuring time of the paste constant. The viscosity can hence be specified, thereby permitting automatic, accurate, prompt and easy measurement and control of the viscosity.

The rotating viscometer of this invention can bring about the following practical effects:

(1) Taking a screen printing machine by way of example, the viscosity control of a paste has heretofore been dependent on experiences of printing technicians and laboratory measurements in screen printing. Moreover, the paste shows non-Newtonian behavior. It has therefore been impossible to determine its accurate viscosity and to control its viscosity accurately. As a consequence, it has been unable to effect screen printing with good accuracy.

This can be attributed to the fact that the paste has properties similar to non-Newtonian fluids and thixotropic properties as mentioned above and the accurate viscosity of the paste cannot be determined due to the low amount of the paste on the printing machine.

According to the rotating viscometer of this invention, the viscosity of the paste, especially, the viscosity of the paste right before its printing can be measured with good accuracy even if the amount of the paste on the screen printing machine is small or the paste has the same properties and non-Newtonian fluids and thixotropic properties. It is hence possible to conduct high-accuracy screen printing.

(2) Since the viscosity of the paste right before its printing can be measured on the screen printing machine as described in the advantage (l), the use of the rotating viscometer of this invention in a screen printing machine also allows to measure the viscosity of the paste immediately before its printing as opposed to the measurement of the viscosity of a paste stored only in a tank in the main body of the screen printing machine and hence permits screen printing of higher accuracy than conventional viscometers.

By also measuring the viscosity of the paste stored in the tank in the main body of the screen printing machine and controlling it at a certain level in advance as in the conventional viscometers, printing of still higher accuracy can be conducted with ease.

For a reduced manufacturing cost, it is possible to omit the system for the measurement of the viscosity of the paste in the tank, which is included in a conventional screen printing machine, and to use only the rotating viscometer of this invention, thereby materializing an economical screen printing machine. A high-accuracy screen printing machine can also be materialized at a low cost if the rotating viscometer of this invention and a necessary controller are added as an accessory to a conventional screen printing machine equipped with no viscosity control system.

(3) The rotating viscometer of this invention can measure the viscosity of a fluid by inserting only a part of the viscometer, for example, a tip portion thereof in the fluid. It is therefore possible to measure the viscosity of a fluid in such a small amount that conventional rotating viscometers are difficult to measure, for example, the viscosity of a small amount of a paste on a screen printing machine as described above.

Accordingly, the use of the rotating viscometer of this invention on a screen printing machine makes it unnecessary to build an expensive and large rotating viscometer in the main body of a screen printing machine like conventional screen printing machines.

The rotating viscometer of this invention allows to arrange the paste tank itself higher freedom than the conventional design in which the paste is stored within each screen printing machine, whereby the rotating viscometer of this invention allows to manufacture a screen printing machines itself in various shapes and at various prices.

(4) Since the rotating viscometer of this invention permits the viscosity measurement of a small amount of a fluid such as paste, it can measure the viscosities of more fluids such as pastes arranged in various forms than conventional rotating viscometers.

(5) Because the rotating viscometer of this invention permits the viscosity measurement of a small amount of a fluid such as paste, the viscosity measurement is not affected by the flow of the fluid which is moving while being kneaded.

(6) The rotating viscometer has such a structure that the revolution speed of its rotary member can be changed over a wide range, for example, from 1 rpm to 100 rpm. It is hence possible to investigate with ease the thixotropic properties and flow curve of a fluid such as paste, whereby a high-accuracy viscosity control is feasible.

(7) According to the rotating viscometer of this invention, it is possible to control the time period from the introduction of a fluid such as paste, which is continuously kneaded, until its discharge, in other words, the shearing time constant. The rotating viscometer of this invention can therefore measure and control its viscosity accurately. Especially, the viscosity of a non-Newtonian fluid such as paste generally varies in accordance with its shearing time.

Its viscosity must thus be determined by specifying the measuring time. In the rotating viscometer of this invention, the paste is automatically drawn into the viscometer upon rotation of the member for kneading the paste. At a constant shearing velocity (i.e., at a constant revolution speed), the paste is discharged after a lapse of a constant period of time and is then recirculated continuously. It is therefore possible to control constant the time period during which the paste is subjected to shearing within the main body of the rotating viscometer, thereby imparting a characteristic that the shearing time is constant. Even in the case of a fluid the viscosity of which is dependent on its shearing time, such as a paste, its viscosity can be measured continuously and accurately.

(8) Besides, the rotating viscometer of this invention features a small, inexpensive and durable structure.

The above and other objects, features and advantages of this invention will be come apparent from the following description and the appended claims, taken in conjunction with the accompanying drawings, in which:

FIGURE 1 is a schematic perspective view of a screen printing machine;

FIGURE 2 is an enlarged fragmentary view of a paste-coating part including a squeezee;

FIGURE 3 is a vertical cross-sectional view of a rotating viscometer according to the first embodiment of this invention;

FIGURE 4 is a vertical cross-sectional view of a rotating viscometer according to the second embodiment of this invention;

FIGURE 5 is a schematic illustration for the determination of the viscosity of a paste;

FIGURE 6 is a flow curve of a pseudoplastic fluid; and

FIGURE 7 is a flow curve of a plastic fluid.

## DETAILED DESCRIPTION OF THE INVENTION AND PREFERRED EMBODIMENTS

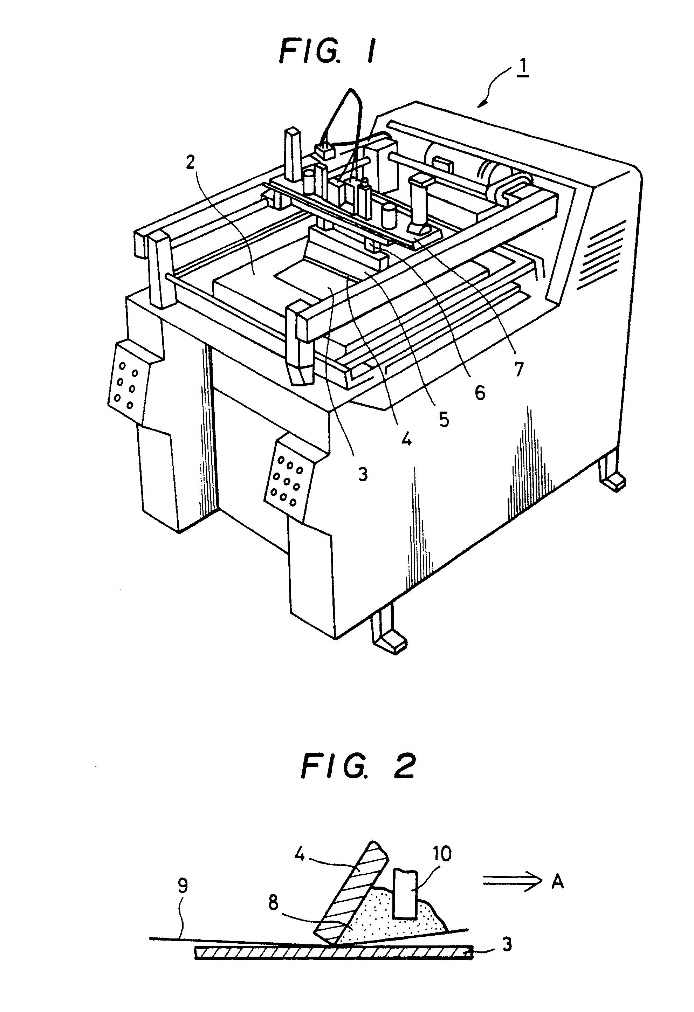

Referring first to FIGURE 1 which is a schematic perspective view of a screen printing machine 1, numerals 2 and 3 indicate a substrate table and a substrate respectively. The substrate 3 is fixed on the substrate table 2 by means of an unillustrated fixing member. Designated at numeral 4 is a squeezee, which is supported by a support member 5. The support member 5 is in turn secured on squeezee carriage 7 by a fixing member 6 which also serve as feed pipes.

In the illustrated screen printing machine 1, the squeezee 4 also serves as a return blade for a paste 8 (see, FIGURE 2). When the squeezee 4 functions as the return blade, the squeezee 4 is lifted at the turn, shifted automatically to a position from which the return of the paste is started, and then lowered there. Upon backward movement of the squeezee 4, the paste is drawn back.

The structure of the screen printing machine is however not necessarily limited to that shown. As an alternative, a return blade may be provided as a member discrete from the squeezee 4.

FIGURE 2 illustrates on an enlarged scale a part of the screen printing machine I, where the paste 8 is applied by the squeezee 4.

When the squeezee carriage 7 is caused to move in the direction indicated by the arrow A by means of an unillustrated motor, the squeezee 4 also advances in the direction indicated by the arrow A so that the substrate 3 is coated with the paste 8 through a screen 9.

The paste 8 is stored in a tank within the main body of the printing machine I and is kneaded to a suitable viscosity. A suitable amount of the paste 8 is fed to the rear side (on the side of the arrow A) of the squeezee 4 by way of the feed pipe and fixing member 6 and support member 5.

In the paste 8 on the rear side of the squeezee 4, a tip portion of a rotating viscometer I0 of this invention is inserted. The rotating viscometer I0 will be described subsequently. The rotating viscometer I0 is provided at a suitable position so that its tip potion can be inserted in the paste 8.

For example, the rotating viscometer I0 may be provided on the rear wall of the squeezee 4, or on a member disposed in the proximity of the squeezee 4, for example, the support member 5, fixing member 6 or carriage 7, or on a return blade.

The squeezee 4 is designed in such a way that its inclination and its pressure against the upper surface of the substrate 3 can be adjusted by signals from an unillustrated controller.

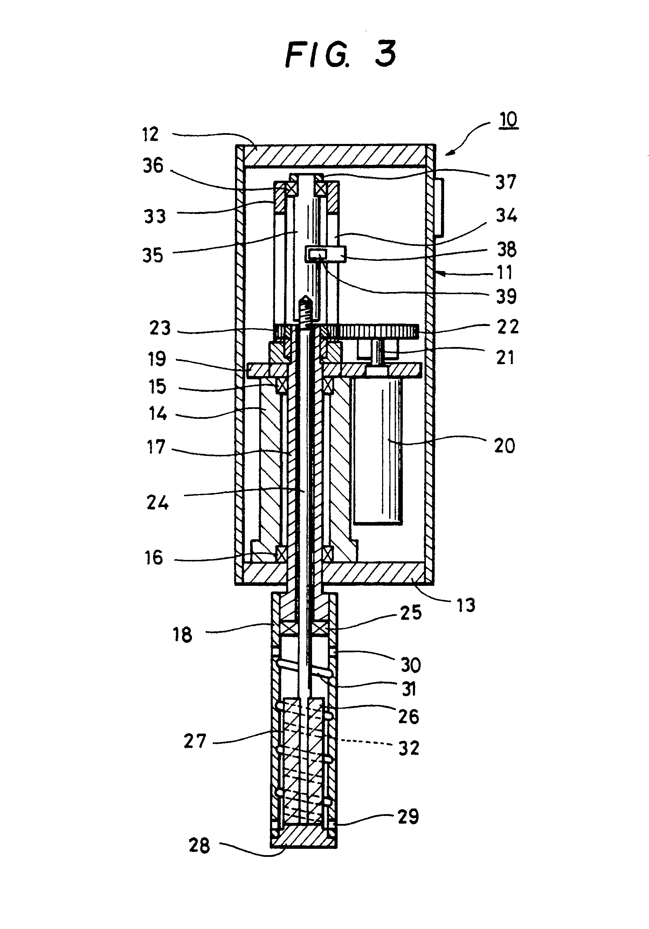

Referring next to FIGURE 3, the first embodiment of the rotating viscometer I0 of this invention will hereinafter be described.

The rotating viscometer I0 is of the radial clearance type. Rotating viscometers such as viscotester and Brookfield viscometer have been known as viscometer. Such conventional rotating viscometers cannot however be used because the nature of the viscosity measurement of the paste 8 on the screen 9, namely, as the viscosity measurement is conducted while the paste 8 is moving and is being kneaded.

Moreover, conventional rotating viscometers which are known and available on the market have such a design that the viscosity of a fluid in a large amount is measured. For example, the fluid in a tank is kneaded and the viscosity of the fluid itself is measured while continuing the kneading of the fluid. Such conventional rotating viscometers cannot however determine the viscosity of a fluid where the fluid is in a small amount and changes considerably in viscosity like the paste 8 on the

screen printing machine I.

Since commercially-available rotating viscometers have been used alone in screen printing machines, the paste 8 is kneaded in an unillustrated tank where the paste is stored. The viscosity of the thus-kneaded paste is then measured. When the viscosity of the paste 8 becomes constant, the thus-kneaded paste 8 is merely fed to the rear side of the squeezee 4 by a suitable means.

The viscosity of the paste also changes moment by moment on the screen printing machine I because the paste 8 is a non-Newtonian fluid having a high viscosity. It has hence been impossible to maintain the paste 8 at an accurate viscosity, thereby failing to perform accurate screen printing.

None of such conventional rotating viscometers is suitable for use in the screen printing machine I, since accurate printing is not feasible and moreover, the screen printing machine becomes large and expensive.

The present invention has therefore developed the small and economical rotating viscometer I0 of the radial clearance type, which is suited for the measurement of the viscosity of the paste 8 on the screen printing machine I even if the amount of the paste 8 is small. The rotating viscometer I0 of this invention is therefore different in principle from usual (conventional) rotating viscometers. The rotating viscometer I0 will hereinafter be described in detail with reference of FIGURE 3.

A main body II of the rotating viscometer I0, which is in the form of a hollow rectangular housing, is closed at the upper opening thereof by an upper cover I2 and at the lower opening thereof by a lower cover I3 with a through-hole therethrough. A cylindrical bearing housing I4 is fixed on the lower cover I3. Ball bearings I5,I6 are provided respectively at edge portions of the bearing housing I4, which edge portions define upper and lower openings of the bearing housing I4. The ball bearings I5,I6 rotatably support a hollow rotary shaft I7.

A lower end portion of the rotary shaft I7 extends out through the through-hole formed in the lower cover I3. A rotary cylinder I8 is fixed on the outer periphery of the thus-extending lower end portion of the rotary shaft I7 so that the rotary cylinder I8 is allowed to rotate together with the rotary shaft I7.

On the top of the bearing housing I4, a fixing plate I9 is fixed. A geared motor 20 is fixedly mounted on the fixing plate I9.

A gear 22 is secured on the drive shaft 2I of the geared motor 20. The gear 22 is maintained in meshing engagement with a gear 23 secured on the rotary shaft I7.

A shaft 24 is inserted in the hollow spacing of the rotary shaft I7. A lower end portion of the shaft 24 is rotatably supported by a ball bearing 25 provided on an upper part of the inner peripheral wall of the rotary cylinder 18.

A stationary cylindrical block 26 is fixed on a lower end portion of the shaft 24. A small cylindrical clearance 27 which is adapted to allow the paste 8 to flow therethrough is formed between the cylindrical block 26 and the rotary cylinder 18.

A cover 28 is fixed over the lower end opening of the rotary cylinder 18 so as to close the lower end opening. The rotary cylinder 18 defines through a lower end portion thereof a paste inlet 29 through which the paste 8 flows into the clearance 27.

Instead of providing this paste inlet 29, it may be possible to omit the cover 28 and to draw up the paste 8 directly through the lower end of the clearance 27.

The rotary cylinder 18 also defines through an upper end portion thereof a paste outlet 30 for discharging the paste 8, which has flowed into the clearance 27 through the paste inlet 29, out of the rotary cylinder 18.

In the first embodiment, the cylindrical block 26 is provided as a stationary member and the rotary cylinder surrounding the cylindrical block 26 is rotated. This structure has an advantage that the cylindrical block 26 is protected by the outer rotary cylinder 18 so as to shield the cylindrical block 26 from the flowing force of the paste 8 present outside the viscometer.

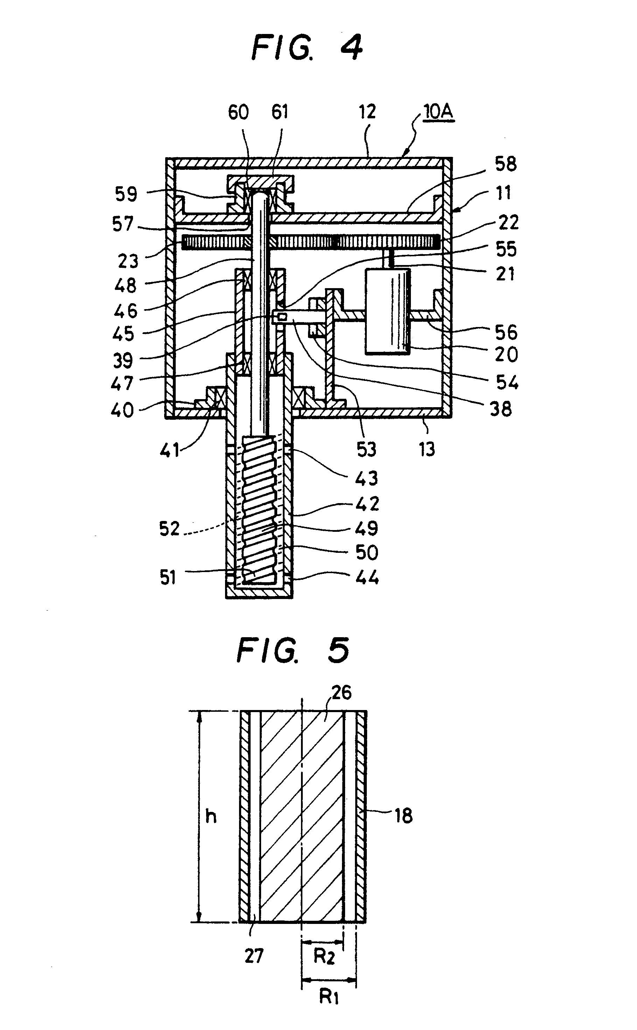

In order to protect a rotary member from external forces, it is possible to adopt the structure shown in FIGURE 4 in which an outer cylinder is provided as a stationary member while an inner cylindrical block serves as a rotary member.

By the way, the above-described rotary cylinder 18 is not absolutely required to have a cylindrical shape. It may take any shape so long as the highly viscous paste 8 is caused to ascend through the clearance 27 formed as a paste flow passage between the rotary cylinder 18 and the cylindrical block 25 and to flow out of the clearance 27 through the paste outlet when the rotary cylinder 18 is rotated.

Similarly, the shape of the cylindrical block 26 is not necessarily limited to a cylindrical block or cylinder.

It is not sufficient for the clearance 27 as the paste flow passage to take the form of a mere radial gap. It is essential that the clearance 27 is formed as a radial gap through which the paste 8 is caused to ascend upon rotation of the rotary cylinder 18.

The paste 8 is allowed to ascend through the clearance 27 upon rotation of the rotary cylinder 18 as described above, because the paste 8 is a fluid having a high viscosity. It is difficult for a low-viscosity fluid such as plain water to ascend through the clearance 27.

It is a characteristic feature of the rotating viscometer 10 of this invention that the high viscosity of the paste is utilized to allow the paste 8 to ascend through the clearance 27. It is another characteristic feature of the rotating viscometer 10 that after the measurement, the paste 8 which has flowed up through the clearance 27 is discharged so as to allow the paste 8 to flow back to its original position.

In order to ensure the ascend of the paste 8 through the clearance 27 of such a small width, a spiral groove 31 depth of which is small may be formed along the central axis of the rotary cylinder 18 in the clearance-defining surface of the rotary cylinder 18 so as to facilitate the upward flow of the paste 8.

Instead of the spiral groove 31 formed in the clearance-defining surface of the rotary cylinder 18, a spiral groove 32 may be formed in the outer surface of the cylindrical block 26 as shown by dotted lines.

As a further alternative, both spiral grooves 31,32 may be formed. The direction of the spiral turn of each of these spiral grooves 31,32 is set in such a way that the upward flow of the paste 8 is promoted by the rotation of the rotary cylinder 18. The lead angle of the spiral turn is lower than, 10 degrees, preferably at an angle of 5 degrees or smaller, for example, 3 degrees.

A cylindrical bearing housing 33 is mounted fixedly on the fixing plate 19. The bearing housing 33 defines at a portion thereof a slit 34 which serves as a stopper for a leaf spring to be described subsequently.

A detection shaft 35 is fixedly fit over on an upper end portion of the shaft 24. The detection shaft 35 is supported rotatably by a ball bearing 36 provided on the inner peripheral wall of an upper end opening of the bearing housing 33.

At an upper portion of the bearing housing 33, there is fixed a stop ring 37 for the prevention of vertical vibrations of the detection shaft 35.

Unless the vertical (i.e., axial) movement of the detection shaft 35 is limited by a certain means, it is impossible to obtain accurate signals from a resistance strain gage 39 to be described subsequently.

Designated at numeral 38 is a leaf spring, which is secured at one end thereof with an adhesive or the like on the outer peripheral wall of the detection shaft 35 and is inserted at the other end thereof in the slit 34 formed in the bearing housing 33. The resistance strain gage 39 is provided on the outer wall of the leaf spring 38 so as to convert torques of the detection shaft 35 into changes in resistance.

As the resistance strain gage 39, a suitable gage such as piezoelectric element, pressure sensitive element or strain gage may be used. In the first embodiment, a strain gage is used.

FIGURE 4 illustrates a rotating viscometer l0A according to the second embodiment of this invention. Different from the rotating viscometer l0 of the first embodiment, the outer member serves as a stationary member while the member provided inside the outer member acts as a rotary member.

The upper end opening and lower end opening of the fixed main body ll of the rotating viscometer l0A are also closed by the upper cover l2 and lower cover l3 respectively. A bearing housing 40 is fixed on the lower cover l3. A stationary cylinder 42 is supported by a ball bearing 4l provided on the bearing housing 40 in such a way that the stationary cylinder 42 is allowed to undergo angular displacement relative to a rotary columnar block 49 to be described subsequently. The lower end of the stationary cylinder 42 is closed by an integral cover.

A paste outlet 43 is formed through the stationary cylinder 42 at a location somewhat the way down from the lower cover l3. A paste inlet 44 is formed through a lower end portion of the stationary cylinder 42. A cylindrical detection member 45 is fixedly fit in an upper end portion of the stationary cylinder 42. At both upper and lower end openings of the detection member 45, a rotary shaft 48 is supported rotatably by ball bearings 46,47.

A rotary columnar block 49 is fixedly suspended from the lower end of the rotary shaft 48. Thus, a clearance 50 is formed as a paste flow passage between the rotary columnar block 49 and stationary cylinder 42.

In order to facilitate the upward flow of the paste 5, which has flowed into the clearance 50 through the paste inlet 44 and has properties like non-Newtonian fluids of high viscosity, through the clearance 50 upon rotation of the rotary columnar block 49, a spiral groove 5l is formed in the outer peripheral surface of the rotary columnar block 49 along the central axis of the rotary columnar block 49.

As a modification, instead of the spiral groove 5l, a spiral groove 52 may be formed in the inner peripheral surface of the stationary cylinder 42 along the central axis of the stationary cylinder 42 as indicated by dotted lines in order to facilitate the upward flow of the paste. As another modification, both spiral grooves 5l,52 may be provided in combination.

A fixing plate 53 is mounted upright on the lower cover l3. A fixing member 54 is in turn secured on the fixing plate 53. The leaf spring 38 is cemented at one end thereof on the fixing member 54.

A slit 55 is formed in a part of the side wall of the detection member 45. The other end of the leaf spring 38 is inserted in the slit 55. On the outer surface of the leaf spring 38, the resistance strain gage 39 is secured.

Between the fixing plate 53 and the main body l, a fixing plate 56 extends horizontally as viewed on FIGURE 4. The geared motor 20 is mounted fixedly on the fixing plate 56. The gear 22 is fixed on the drive shaft 2l of the geared motor 20. The gear 22 is maintained in meshing engagement with the gear 23 secured on the rotary shaft 48.

On the inner wall of the main body ll and above the gears 22,23, a fixing plate 58 defining a through-hole 57 is fixedly provided horizontally across the main body ll. A bearing housing 59 is fixed concentrically with the through-hole 57 on the fixing plate 58.

The rotary shaft 48 is rotatably supported at an upper end portion thereof by a ball bearing 60, which is provided on the inner peripheral wall of the bearing housing 59. A stopper cap 6l is fixedly screwed on the upper end of the bearing housing 59, whereby the rotary shaft 48 is preventing from vibrating in the vertical direction.

The rotating viscometer l0A according to the second embodiment of this invention has the above-described structure.

In the viscometers l0,l0A, the detection shafts 35,48, namely, the stationary cylindrical block 26 and the rotary columnar block 49 are prevented from undergoing vertical vibrations owing to the provision of the stopper ring 37 and stopper cap 6l. Therefore, the length of the flow passage of the paste 8 is maintained constant and highly reliable results are obtained. In addition, the resistance strain gage 39 is also prevented from undergoing vertical vibrations.

The rotating viscometers l0,l0A of this invention have the above-described constructions respectively.

When the rotating viscometer l0 or l0A is applied to the above-described screen printing machine l, it is operated in the following manner. The paste 8 is fed through the feed member 6 onto the screen 9. While moving the squeezee carriage 7, i.e., the squeezee 4 in the direction A, the paste 8 is applied onto the substrate 3 through the screen 9 as shown in FIGURE 2. The rotary cylinder l8 of the viscometer l0 or the stationary cylindrical body 42 of the viscometer l0A is inserted at its tip portion into the paste 8 until the paste inlet 29 or 44 is submerged under the paste 8. When the geared motor 20 is continuously driven, the gear 22 is rotated and the gear 23, which meshes with the gear 22, is then rotated. Thus, the rotary shaft l7 or 48 on which the gear 23 is fixed rotates in the same direction as the gear 23.

Upon rotation of the rotary shaft l7 or 48, the rotary cylinder l8 or rotary columnar block 49 which is fixed on the rotary shaft l7 or 48 is rotated relative to the stationary cylindrical block 26 or stationary cylinder 42.

When the rotary cylinder l8 or rotary columnar block 49 rotates, the paste 8 having properties similar to high-viscosity non-Newtonian fluids is drawn upwards through the paste inlet 29 or 44 into the clearance 27 or 50 as the paste flow passage. While being assisted by the spiral groove 3l (and/or 32) or 5l (and/or 52), the paste 8 is allowed to flow upwards through the clearance 27 or 50.

As the paste ascends through the clearance 27 or 50 in the above-described manner, the paste 8 is discharged through the paste outlet 30 or 43 formed through the upper part of the rotary cylinder l8 or stationary cylinder 42. The paste 8 then flows down along the outer peripheral wall of the rotary cylinder l8 or stationary cylinder 42 to its initial position, namely, the position where the paste 8 is supposed to exist upon its viscosity measurement.

As the paste flows upwards through the clearance 27 or 50, a torque the magnitude of which is dependent on the viscosity of the paste in the clearance 27 or 50 is applied in the direction of the rotary member to the stationary cylindrical block 26 or stationary cylinder 42. In the viscometer shown in FIGURE 3, the detection shaft 35 undergoes an angular displacement in the same direction as the stationary cylindrical block 26 and shaft 24 against the leaf spring 38 inserted at one end thereof in the slit 37. As a result, the leaf spring 38 is flexed. Since the degree of this deformation of the leaf spring 38 is proportional to the magnitude of the torque applied to the rotary member, an electrical signal is output from the resistance strain gage 39. This electrical signal is employed as a signal representing the viscosity of the paste 8. In the viscometer of FIGURE 4 on the other hand, the detection member 45 rotates against the leaf spring 38 inserted in the slit 55. As a result, the leaf spring 38 is bent and similar to the viscometer of FIGURE 3, a signal representing the viscosity of the paste 8 is obtained from the resistance strain gage 39.

A description will next be made of a method for the measurement of the viscosity of the paste 8, using the rotating viscometer l0 of FIGURE 3 by way of example.

With reference to FIGURE 5, the following equations (I) and (2) are established roughly:

$$D = [(4\pi NR_1^2)/(R_1^2 - R_2^2)]\bullet(I/60) \ ..... \ (I)$$
$$\eta = [7.5\bullet M(R_1^2 - R_2^2)]/(R_1^2\bullet R_2^2\bullet\pi^2\bullet h\bullet N) \ ..... \ (2)$$

where:

$R_2$: Radius of the stationary cylindrical block 26;

$R_1$: Radius of the inner peripheral wall of the rotary cylinder l8;

h: Height of the stationary cylindrical block 26;

N: Revolution speed (rpm) of the rotary cylinder l8;

D: Rate of change ($sec^{-1}$) in the horizontal direction of the speed of the paste through the clearance 27 as the paste flow passage (i.e., shearing speed);

M: Torque applied to the stationary cylindrical block 26 through the paste 8; and

$\eta$: Viscosity of the paste 8.

From the above equations, the viscosity $\eta$ of the paste 8 can be determined by measuring the torque M with the resistance strain gage 39.

The viscosity of the paste 8 can be determined by the rotating viscometer l0A substantially in the same manner. Therefore, the method for measuring the viscosity by the rotating viscometer l0A is omitted herein.

A further description will hereinafter be made of an actual method for measuring the viscosity of the paste 8 with good accuracy. Here again, the rotating viscometer l0 is employed by way of example.

Since the general paste (ink) 8 has properties similar to high-viscosity non-Newtonian fluids, its viscosity draws a flow curve. Each measured viscosity is an apparent viscosity at the revolution speed (shearing speed) D of the rotary cylinder l8 at the time of the measurement.

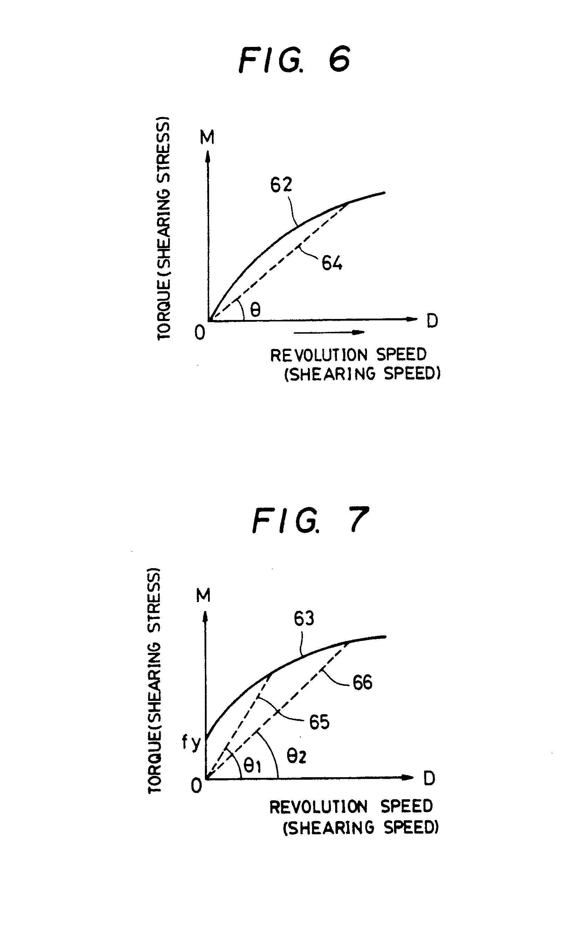

Pastes are generally classified into quasi-plastic fluids and plastic fluids. These fluids draw flow curves 62,63 shown in FIGURES 6 and 7 respectively, when torques (shearing stresses) M are plotted along the Y-axis and revolution speeds (shearing speeds) D are plotted along the X-axis.

By the way, straight lines 64,65,66 shown by dashed lines are torque-revolution speed curves for Newtonian fluids.

In the case of the Newtonian fluids represented by the straight lines 64,65,66, the torque increases in proportion to the revolution speed. The straight lines 64,65,66 therefore extend linearly at angles $\theta$, $\theta_1$ and $\theta_2$ respectively. By contrast, the pastes draw curves as indicated by the flow curves 62,63. As readily envisaged from the curves 62,63, yield value $f_y$ varies depending on the type of paste.

Namely, viscosity $\eta$ is represented by the following equation:

Viscosity ($\eta$) = (shearing stress $\tau$)/(shearing speed D)
$$= \tau/D = \tan\theta \ ........(3)$$

If the flow curve starts from 0 and extends linearly like Newtonian fluids, viscosity $\eta$ is always constant relative to shearing speed D.

As shown in FIGURES 6 and 7, viscosity $\eta$ is

however dependent on shearing speed D in the case of pastes which are non-Newtonian fluids. Since the viscosity differs in accordance with the angles $\theta$, $\theta_1$ and $\theta_2$, it is not fully meaningful to determine only one point on its flow curve.

In order to determine the viscosity $\eta$ of the paste 8, it is hence necessary to choose two points, for example, the two points on the straight lines extending at the angles $\theta_1$ and $\theta_2$ respectively. Then, the viscosities $\eta$ corresponding to the angles $\theta_1$ and $\theta_2$ are measured. Moreover, their ratio is also calculated. Using the thus-calculated ratio as a thixotropy index which indicates the degree of thixotropy, the state of the flow curve 63 is represented. This also applies to the curve 62.

As a method for pursuing the above measurement, it is useful to employ at least one of the following methods. It is desirable to employ all the following methods where possible.

Methods:

(a) The viscosity is measured at constant revolution speeds (shearing speeds) D. From the results of this measurement, the viscosity of the paste 8 can be estimated in advance at a desired revolution speed.

(b) Thixotropy index is determined in accordance with the following equation:

Thixotropy index = $\eta_L/\eta_V$ ...... (4)

where

$\eta_L$: Viscosity at a low revolution speed $D_L$; and

$\eta_V$: Viscosity at a high revolution speed $D_V$.

For the usual screen printing machine I, it is sufficient to use the above methods (a) and (b) in combination. In these days where microcomputers are employed widely, it is useful to build a microcomputer in the screen printing machine I and to employ the following method (c) for improve the accuracy further.

(c) Using a microcomputer, the flow curves 62,63 and the like are measured and displayed directly as patterns.

In the above embodiments, the rotating viscometers of the radial clearance type have been described as rotating viscometers. The rotating viscometer of this invention is not however limited to the radial clearance type. Other types such as axial clearance type and other structures may also be used. Needless to say, its structure may be suitably changed without causing any problems or inconvenience and departing from the spirit of the present invention.

In the above embodiments, no reference has been made to the measurement of the temperature of the paste 8 in view of the fact that the temperature measurement is contrary to the reduction of the manufacturing cost and is not required significantly. When a fluid like a paste of a certain specific type is chosen, it may be desired to measure and correct the temperature of the paste. In such a case, it is only necessary to provide a temperature sensor in the vicinity of the part of the rotating viscometer 10 or 10A, which part is to be inserted in the paste 8, for example, near its tip portion (in this case, the temperature sensor may be built in the tip portion) in order to detect the temperature of the paste. A signal representing the temperature of the paste 8 is output from the temperature sensor. It is convenient to amplify the signal by an amplifier and to display the temperature and viscosity of the paste 8 in a real time mode on a paste temperature displayer provided with the rotating viscometer 10 or 10A. If one wants to obtain the viscosity of the paste 8 as a value corrected to a desired temperature, it is convenient to display at the displayer a viscosity temperature-controlled by a temperature correction circuit. As further modifications, it may also be feasible to perform various measurements by providing an additional function to display the viscosity and temperature in a real time mode, a system to preset the upper and lower limits of the viscosity, a function to change the shearing time, etc.

Having now fully described the invention, it will be apparent to one of ordinary skill in the art that many changes and modifications can be made thereto without departing from the scope of the invention as defined by the claims.

## Claims

1. A rotating viscometer comprising
   an inner (26,49) and an outer (18,42) preferentially cylindrical member with a clearance (27,50) between opposite surfaces of the two members, said members being rotatable relatively to each other about a common axis at a constant rotational speed;
   a paste inlet (29,44) formed in said outer member for allowing a paste to flow into the clearance;
   a spiral groove (31,32,51,52) formed in one of said opposite surfaces or both of said opposite surfaces of the two members respectively and extending along said axis at least over the whole length of said clearance for guiding said paste through said clearance along said axis;
   a paste outlet (30,43) formed in said outer member for allowing said paste guided through said clearance to flow out of the clearance; and
   means (38,39) for sensing a torque applied to one of said members owing the viscosity of said paste introduced into the clearance,

**characterized in that**

the lead angle of the spiral groove is lower than 10° and the clearance (27,50) is small enough so that the shear rate and the shearing time remain substantially constant.

2. The rotating viscometer as claimed in claim 1, wherein the lead angle of the spiral groove (31,32;51,52) is lower than 5°.

3. The rotating viscometer as claimed in claim 2, wherein the lead angle of the spiral groove (31,32;51,52) is at an angle of about 3°.

4. The rotating viscometer as claimed in any one of the claims 1 to 3, wherein the paste inlet (29,44) is formed through a lower end portion of a cylindrical outer member.

5. The rotating viscometer as claimed in any one of the claims 1 to 4, wherein the paste outlet (30,43) is formed through a cylindrical outer member at a location above the paste inlet.

6. The rotating viscometer as claimed in any one of the claims 1 to 5, wherein the sensing means is a torque/ electrical signal transducer (39) which upon application of a torque of the member thereto, generates an electrical signal corresponding to the torque.

7. The rotating viscometer as claimed in claim 6, wherein the torque/electrical signal transducer (39) is provided on a spring member (38) which is deformed upon application of the torque of the member.

8. The rotating viscometer as claimed in claim 7, wherein the torque/electrical signal transducer is provided on a leaf spring (38) which is fixed at one end thereof on either one of a viscometer housing (11) and the stationary member and upon an angular displacement of the stationary member, the other end of the leaf spring is brought into engagement with the other one of the viscometer housing and the stationary member.

9. The rotating viscometer as claimed in claim 8, wherein the torque/electrical signal transducer is a strain gauge (39).

10. The rotating viscometer as claimed in any one of the claims 1 to 9, further comprising a limiting means (37,61) for preventing the sensing means (38, 39) from vibrating along said common axis of said members.

**Revendications**

1. Viscosimètre rotatif comportant

un élément intérieur (26,49) et un élément extérieur (18,42), de préférence cylindriques, avec un espace libre (27,50) entre les surfaces se faisant face des deux éléments, lesdits éléments pouvant être entraînés en rotation l'un par rapport à l'autre, autour d'un axe commun, à une vitesse de rotation constante;

une entrée (29,44) de la pâte formée dans ledit élément extérieur pour permettre à de la pâte de s'écouler dans l'espace libre;

une rainure en spirale (31, 32, 51, 52) formée dans l'une desdites surfaces, qui se font face, ou dans l'une et l'autre desdites surfaces, qui se font face, des deux éléments respectivement et s'étendant le long dudit axe au moins sur toute la longueur dudit espace libre pour guider ladite pâte à travers ledit espace libre le long dudit axe;

une sortie (30,43) de la pâte formée dans ledit élément extérieur pour permettre à ladite pâte, guidée à travers ledit espace libre, de s'écouler hors dudit espace libre; et

des moyens (38,39) pour détecter un couple appliqué à l'un desdits éléments du fait de la viscosité de ladite pâte introduite dans ledit espace libre,

viscosimètre caractérisé

par le fait que l'angle d'hélice de la rainure en spirale est inférieur à 10° et que l'espace libre (27,50) est suffisamment étroit pour que le gradient de cisaillement et la durée du cisaillement restent sensiblement constants.

2. Viscosimètre rotatif comme revendiqué dans la revendication 1, dans lequel l'angle d'hélice de la rainure en spirale (31, 32, 51, 52) est inférieur à 5°.

3. Viscosimètre rotatif comme revendiqué dans la revendication 2, dans lequel l'angle d'hélice de la rainure en spirale (31, 32, 51, 52) est un angle d'environ 3°.

4. Viscosimètre rotatif comme revendiqué dans l'une quelconque des revendications 1 à 3, dans lequel l'entrée (29,44) de la pâte est formée à travers une portion d'extrémité inférieure d'un élément cylindrique extérieur.

5. Viscosimètre rotatif comme revendiqué dans l'une quelconque des revendications 1 à 4, dans lequel la sortie (30,43) de la pâte est formée à travers un élément cylindrique extérieur à un endroit situé au-dessus de l'entrée de la pâte.

6. Viscosimètre rotatif comme revendiqué dans l'une quelconque des revendications 1 à 5, dans lequel le moyen de détection est un transducteur (39) couple/signal électrique qui, lorsqu'on y applique un couple de l'élément, génère un signal électrique correspondant au couple.

7. Viscosimètre rotatif comme revendiqué dans la revendication 6, dans lequel le transducteur (39) couple/signal électrique est monté sur un élément élastique (38) qui se déforme lors de l'application du couple de l'élément.

8. Viscosimètre rotatif comme revendiqué dans la revendication 7, dans lequel le transducteur couple/signal électrique est monté sur un ressort à lames (38) qui est fixé, à l'une de ses extrémités, sur l'un des deux d'un boîtier de viscosimètre (11) et de l'élément fixe, et dont, lors d'un déplacement angulaire de l'élément fixe, l'autre extrémité est amenée en prise avec l'autre des deux, du boîtier de viscosimètre et de l'élément fixe.

9. Viscosimètre rotatif comme revendiqué dans la revendication 8, dans lequel le transducteur couple/signal électrique est une jauge de contrainte (39).

10. Viscosimètre rotatif comme revendiqué dans l'une quelconque des revendications 1 à 9, comportant en outre un moyen de limitation (37,61) pour empêcher les moyens de détection (38,39) de vibrer le long dudit axe commun desdits éléments.

**Patentansprüche**

1. Ein Drehviskosimeter, mit einem inneren (26, 46) und einem äußeren (18,42) vorzugsweise zylindrischen Teil mit einem Spalt (27, 50) zwischen einander gegenüberliegenden Oberflächen der zwei Teile, wobei die Teile relativ zueinander um eine gemeinsame Achse mit einer konstanten Geschwindigkeit drehbar sind;

einem Masseeinlaß (29, 44), der in dem äußeren Teil gebildet ist, um einer Masse zu erlauben, in den Spalt zu fließen;

einer Spiralrille (31,32, 51, 52), die in einer der gegenüberliegenden Oberflächen oder jeweils beiden der gegenüberliegenden Oberflächen der zwei Teile gebildet ist und sich längs der Achse wenigstens über die gesamte Länge des Spalts erstreckt, zum Führen der Masse durch den Spalt längs der Achse;

einem Masseauslaß (30, 43), der in dem äußeren Teil gebildet ist, um der durch den Spalt geführten Masse zu ermoglichen, aus dem Spalt herauszufließen; und

einer Einrichtung (38, 39) zum Abfühlen eines Drehmoments, das auf eines der Teile infolge der Viskosität der in den Spalt eingeführten Masse ausgeübt wird,

**dadurch gekennzeichnet**, daß der Anstiegswinkel der Spiralrille kleiner als 10° und der Spalt (27, 50) klein genug ist, so daß die Scherrate und die Scherzeit im wesentlichen konstant bleiben.

2. Das Drehviskosimeter nach Anspruch 1, wobei der Anstiegswinkel der Spiralrille (31,32;51,52) kleiner als 5° ist.

3. Das Drehviskosimeter nach Anspruch 2, wobei der Anstiegswinkel der Spiralrille (31, 32; 51,52) bei ungefähr 3° liegt.

4. Das Drehviskosimeter nach wenigstens einem der Ansprüche Ansprüche 1 bis 3, wobei der Masseeinlaß (29, 44) in einem unteren Endteil eines zylindrischen äußeren Teils gebildet ist.

5. Das Drehviskosimeter nach wenigstens einem der Ansprüche 1 bis 4, wobei der Masseauslaß (30, 43) in einem zylindrischen äußeren Teil an einer Stelle oberhalb des Masseeinlasses vorgesehen ist.

6. Das Drehviskosimeter nach wenigstens einem der Ansprüche 1 bis 5, wobei die Fühlereinrichtung ein Wandler (39) zur Umwandlung eines Drehmoments in ein elektrisches Signal ist, welche bei Anlage eines Drehmoments des Teils daran ein elektrisches Signal entsprechend dem Drehmoment erzeugt.

7. Das Drehviskosimeter nach Anspruch 6, wobei der Wandler (39) zur Umwandlung eines Drehmoments in ein elektrisches Signal auf einem Federelement (38) vorgesehen ist, welches bei Anlegen des Drehmoments des Teils deformiert wird.

8. Das Drehviskosimeter nach Anspruch 7, wobei der Wandler zum Umwandeln eines Drehmoments in ein elektrisches Signal auf einer Blattfeder (38) vorgesehen ist, welche mit ihrem einen Ende entweder an einem Viskosimetergehäuse (11) oder dem stationären Teil befestigt ist, und bei einer Winkelverschiebung des stationären Teils das andere Ende der Blattfeder in Eingriff entweder mit dem stationären Teil oder dem Viskosimetergehäuse gebracht ist.

9.  Das Drehviskosimeter nach Anspruch 8, wobei der Wandler zur Umwandlung eines Drehmoments in ein elektrisches Signal eine Dehnmeßeinrichtung (39) ist.

10. Das Drehviskosimeter nach wenigstens einem der Ansprüche 1 bis 9, welches ferner eine Begrenzungseinrichtung (37, 61) umfaßt, um die Fühlereinrichtung (38, 39) an Vibrationen längs der gemeinsamen Achse der Teile zu hindern.

EP 0 231 873 B1

## FIG. 1

## FIG. 2

14

# FIG. 3

## FIG. 4

## FIG. 5

## FIG. 6

## FIG. 7